(19) Europäisches Patentamt
European Patent Office
Office européen des brevets

(11) **EP 4 406 417 A1**

(12) **EUROPEAN PATENT APPLICATION**

(43) Date of publication:
**31.07.2024   Bulletin 2024/31**

(21) Application number: **23154028.7**

(22) Date of filing: **30.01.2023**

(51) International Patent Classification (IPC):
*A23F 3/14* (2006.01)          *A23F 3/16* (2006.01)
*A23F 5/14* (2006.01)          *A23F 5/24* (2006.01)
*A23F 5/36* (2006.01)          *A23F 5/42* (2006.01)
*A23G 1/56* (2006.01)          *A23L 2/52* (2006.01)
*A23L 2/68* (2006.01)          *A23L 29/00* (2016.01)
*A23L 29/212* (2016.01)          *A23L 29/219* (2016.01)
*A23L 29/231* (2016.01)          *A23L 29/238* (2016.01)
*A23L 29/25* (2016.01)          *A23L 29/256* (2016.01)
*A23L 29/30* (2016.01)          *A23L 33/16* (2016.01)
*A23L 33/165* (2016.01)

(52) Cooperative Patent Classification (CPC):
**A23L 2/52; A23F 3/14; A23F 3/16; A23F 5/14;
A23F 5/24; A23F 5/36; A23F 5/42; A23G 1/56;
A23L 2/68; A23L 29/015; A23L 29/212;
A23L 29/219; A23L 29/231; A23L 29/238;
A23L 29/25;**                              (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ekaterra Research and Development
UK Limited
Sharnbrook, Bedfordshire MK44 1LQ (GB)**

(72) Inventor: **The designation of the inventor has not
yet been filed**

(74) Representative: **Mewburn Ellis LLP
Aurora Building
Counterslip
Bristol BS1 6BX (GB)**

(54) **AN IRON FORTIFIED BEVERAGE COMPOSITION**

(57)   The present invention relates to a tea composition. In particular, the present invention relates to an iron fortified tea composition. Accordingly, the present invention provides a beverage composition comprising;
a) a water-soluble iron compound;
b) at least one acid; and
c) a beverage product,
wherein:
- the water-soluble iron compound has a solubility in water at 25 °C of 0.006g/mL or greater; and
- when the acid is ascorbic acid, one or more further acids are also present.

**(Cont. next page)**

EP 4 406 417 A1

(52) Cooperative Patent Classification (CPC): (Cont.)
**A23L 29/256; A23L 29/35; A23L 33/16;**
**A23L 33/165;** A23V 2250/02; A23V 2250/032;
A23V 2250/044; A23V 2250/056;
A23V 2250/1592

**Description**

**Field of the Invention**

The present invention relates to a beverage composition. In particular, the present invention relates to an iron fortified beverage composition.

**Background and Prior Art**

Staying hydrated is believed to bring about many health benefits to both the body and mind. Thus, it is often said that many non-alcoholic beverages are believed to refresh the mind. There are many non-alcoholic beverages available in the market for consumption. Tea is the most popular out of these. Traditionally, tea refers to those products which were obtained from the tea plant *Camellia Sinensis.*

However, recently the definition of tea has become much broader, and it is now generally accepted that the definition of tea also includes any form of herbal infusion. Thus, commonly, these herbal infusions are now referred to as herbal teas.

Polyphenols that are present in tea are considered to be good for human health. There are varieties of tea available in the market, e.g. black tea, green tea, oolong tea, white tea, etc. Black tea is generally prepared by a process which includes the steps of withering, macerating, fermenting, and firing/drying. On the other hand, green tea manufacturing process does not include the step of fermentation. Therefore, the characteristic profile of green tea is different from that of black tea.

Most of the people in Asian countries drinks tea at least twice a day or even more. Therefore, tea could be one of the ways of delivering nutrients and essentials elements.

Herbal teas are also generally rich in antioxidants, vitamins and essential nutrients, compounds which are strongly associated with health benefits, such as relieving stress, boosting immunity, reducing pain and aiding digesting. Thus, herbal teas are also now seen as a convenient way of delivering these essential nutrients and elements to an individual.

Iron is one of the most important elements needed for proper functioning of human body. It is an essential element to produce blood in human body. Iron deficiency can lead to anaemia which can become serious if not treated on time. Hence, there are several iron fortified foods products that are available in the market.

A selection of prior art documents relating to iron fortified food products are summarized below.

US6998143 (Nestle, 2006) discloses an iron fortification complex which may be used to fortify foods and beverages with iron. The complex is formed of ferric ions and caseinate. The complex is sufficiently stable as to be suitable for use in retorted products. However, despite the stability, the iron in the complexes has substantially the same bioavailability as ferrous sulphate.

WO03032741 (Unilever, 2003) discloses a tea product fortified with a ferrous-plant protein hydrolysate complex. The complex does not cause precipitation of iron-polyphenol; complexes in the tea and is also bioavailable. A tea drink made from the tea of the invention has an attractive colour.

US10863753 (University of Toronto, 2020) discloses an iron-fortified tea composition comprising iron EDTA and a chelate in a ratio of 1:2 or greater. While this composition is effective at delivering iron to infusions prepared form the iron fortified tea composition, the resulting infusions typically suffer from an undesired darkening in infusion colour. This undesired darkening in infusion colour is most pronounced when infusions are prepared using hard water (water with a total hardness of ≥60 ppm). As many consumers across the world brew their tea using hard water, an iron-fortified tea composition that can deliver iron without detriment to the infusion colour using water of varying hardness is still required.

Given the popularity and wide-spread consumption of beverages such as tea globally, fortifying tea products with iron clearly would be beneficial in addressing the deficiency in iron amongst the global population.

However, the present inventors have discovered that fortifying a tea product with iron is particularly problematic. It is believed that this problem principally arises because polyphenol compounds that are present in tea react with iron to form precipitates and make the colour of the beverage quite dark in colour. Beverages that are too dark in colour are generally not acceptable by consumers.

The inventors have also discovered that fortifying tea with iron and then delivering the iron to the end cup without any detriment to the sensorial properties (e.g. colour, taste etc.) of the tea product is particularly challenging for infusions prepared using hard water. Hard water being water with a high mineral content (e.g. greater than 60 ppm of minerals such as calcium carbonate). It is believed this problem arises due to the increased levels of mineral ions, such as calcium and magnesium, present in hard water and the increased pH of hard water. This increased pH and increased concentration of mineral ions is thought to competitively displace iron from the binders that are typically used to aid its delivery. Once displaced, iron is then free to react with the tea polyphenols resulting in an undesired darkening to the tea infusion.

As hard water is extremely prevalent as global a water source, there remains a need for new iron fortified tea compositions which deliver high amounts of iron to the end cup without detriment to infusion colour, particularly for tea beverages made using hard water. For example, it is estimated that over 85% of the water supply in America is hard water and around 60% of the water supply in the UK is hard water.

The present inventors while working on this problem have surprisingly found that compositions comprising a water-soluble iron compound a solubility in water at 25 °C of 0.006g/mL or greater, together with one or more acids beneficially results in excellent delivery of iron without any detriment to the infusion colour, when using both hard and soft water.

This specific combination of a water-soluble iron compound and an acid (such as citric acid) and its beneficial use in delivering iron in iron fortified tea products could not have been realised from the disclosures found in the art.

## Summary of the invention

In a first aspect, the present invention provides a beverage composition comprising;

    a) a water-soluble iron compound;
    b) at least one acid; and
    c) a beverage product,

wherein:

- the water-soluble iron compound has a solubility in water at 25 °C of 0.006g/mL or greater; and
- when the acid is ascorbic acid, one or more further acids are also present.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

The disclosure of the invention as found herein is to be considered to cover all embodiments as found in the claims as being multiply dependent upon each other irrespective of the fact that claims may be found without multiple dependency or redundancy.

The present invention provides a beverage composition comprising;

    a) a water-soluble iron compound;
    b) at least one acid; and
    c) a beverage product,

wherein:

- the water-soluble iron compound has a solubility in water at 25 °C of 0.006g/mL or greater; and
- when the acid is ascorbic acid, one or more further acids are also present.

*The water-soluble iron compound*

The water-soluble iron compound preferably has a solubility in water at 25 °C of 0.01 g/mL or greater, more preferably 0.03g/mL or greater, even more preferably 0.05g/mL or greater, still more preferably 0.075g/mL or greater, and most preferably 0.09g/mL of greater. It will be appreciated that, unless stated otherwise, the water solubilities quoted herein are those measured at ambient pressure (1 atmosphere).

The water-soluble iron compound may preferably be selected from ferric sodium EDTA, ferric chloride, ferric gluconate, ferrous ammonium sulphate, ferric EDDHA, ferrous bisglycinate, ferric ammonium citrate, ferrous gluconate, or mixtures thereof. More preferably, the water-soluble iron compound is selected from ferric sodium EDTA, ferric chloride or ferric gluconate, and most preferably ferric sodium EDTA.

The water-soluble iron compound may be present in any suitable amount. Preferably, the amount of water-soluble iron compound is in the range of 0.05 to 5 %, more preferably 0.05 to 3%, even more preferably 0.1 to 3%, still more preferably 0.1 to 1, and most preferably 0.2 to 0.5% by weight of the composition.

Thus, it will be appreciated that the amount of iron present in the beverage composition will be in the range of 0.05 to 5 %, more preferably 0.05 to 3%, even more preferably 0.1 to 3%, still more preferably 0.1 to 1, and most preferably 0.2 to 0.5% by weight of the composition.

*The acid*

The composition comprises at least one acid. It will be appreciated that any suitable acid may be used.

In certain embodiments, the acid has a pKa value (in water at 25°C) of less than 5.0. Preferably, the acid has a pKa value (in water at 25°C) of less than 4.0, and most preferably less than 3.5.

Thus, in some embodiments, the acid has a pKa value (in water at 25°C) of between 1.0 and 4.0, preferably between 1.0 and 3.5, more preferably between 1.5 and 3.5 and most preferably between 2.0 and 3.5.

It will be appreciated that for polyprotic acids, the pka value mentioned herein refers to the pka1 value. Thus, the pka values referenced herein refer to the pka values (the negative logs of the acidity constants) associated with the first stage in which a polyprotic acid loses a proton. Suitably, the pka value refers to the pka value associated with proton loss from the $\alpha$-carboxyl group ($\alpha$-carboxylic acid).

In certain embodiments, the acid is not a reducing agent. For example, in certain embodiments, the acid is not ascorbic acid (vitamin C). If ascorbic acid is present, the composition must comprise one or more other acids, as defined herein.

The acid is preferably a carboxylic acid. That is a compound comprising at least one carboxylic acid group. A non-limited list of suitable carboxylic acids includes acetic acid, formic acid, propionic acid, lactic acid, pyruvic acid, butyric acid, citric acid, malic acid, oxalic acid, tartaric acid, succinic acid, fumaric acid, itaconic acid, malonic acid, sorbic acid and gluconic acid.

In certain preferred embodiments, the acid is a polycarboxylic acid. That is an acid comprising one or more carboxylic acid groups.

Thus, in certain embodiments, the acid is selected from citric acid, malic acid, oxalic acid, tartaric acid, succinic acid, fumaric acid, itaconic acid, gluconic acid or combinations thereof. Preferably, the acid is selected from citric acid, malic acid, oxalic acid, tartaric acid, gluconic acid or combinations thereof. More suitably, the acid is selected from citric acid, malic acid, oxalic acid, tartaric acid or combinations thereof. Most suitably, the acid is citric acid.

The amount of acid present in the composition is preferably in the range of greater than 0.6 to less than 3.5% by weight of the composition. Preferably, the amount of acid present in the composition is in the range of 0.65 to 3.25% by weight of the composition. More preferably, the amount of acid present in the composition is in the range of 0.7 to 3.0% by weight of the composition. Still more preferably, the amount of acid present in the composition is in the range of 1.0 to 3.0% by weight of the composition. Yet more preferably, the amount of acid present in the composition is in the range of 1.5 to 3.0% by weight of the composition. Most preferably, the amount of acid present in the composition is in the range of 2.0 to 2.5% by weight of the composition.

*The beverage product*

It will be appreciated that the beverage product may be any beverage precursor to which water (e.g. boiling water) may be added to prepare a beverage infusion. Non-limiting examples of the beverage product are tea leaf products, herbal tea products, coffee beans, ground coffee powder, cocoa products, instant tea products, instant coffee products and the like.

The amount of beverage product (e.g. leaf tea product) in the composition is preferably in the range of 75 to 99%, more preferably 80 to 98.5%, even more preferably 85 to 98.5%, yet more preferably 87 to 98.5%, still more preferably 90 to 98.5% and most preferably 92 to 98.5% by weight of the composition.

In certain embodiments, the composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The leaf tea product may preferably be selected from a black tea product, a green tea product, an oolong tea product, a white tea product or blends thereof.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is green tea.

In certain embodiments, the beverage product is a herbal (tea) product.

For the purpose of the present invention, the term herbal (tea) product may preferably be any (tea) product produced from a herbal plant material which is fit for human consumption. The herbal plant material may preferably comprise the leaves of the plant, roots of the plants, flowers of the plant, fruits of the plants or any other parts of the plants. Preferably, the herbal plant material refers to the leaves of the plant.

Preferably, the herbal (tea) product comprises medicinal plants which preferably means plants that have beneficial properties associated with human health.

In certain preferred embodiments, the herbal (tea) product is selected from a rooibos (tea) product, a hibiscus (tea) product, a chamomile (tea) product, a rosehip (tea) product, a mint (tea) product, a lemon verbena (tea) product, a chicory (tea) product, an orange (tea) product, a yerba mate (tea) product and combinations thereof.

Preferably, the herbal (tea) product is selected from a rooibos (tea) product, a hibiscus (tea) product, a chamomile (tea) product, a lemon verbena (tea) product and combinations thereof. More preferably, the herbal (tea) product is selected from a rooibos (tea) product, a hibiscus (tea) product, a chamomile (tea) product and combinations thereof. Still more preferably, herbal (tea) product is selected from a rooibos (tea) product or a hibiscus (tea) product. Most preferably, the herbal (tea) product is a rooibos (tea) product.

It will also be appreciated that in some embodiments, the beverage product is an instant beverage, such as instant coffee and tea powders. Instant beverage products are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

The instant beverage product is thus preferably in the form of a powder or granule produced by extracting the beverage product (e.g. tea leaf, coffee etc.) with a solvent (e.g. water), optionally clarifying the extract, and drying it (e.g. spray-drying or freeze-drying) to obtain a powder or granules.

The instant beverage product is thus preferably in the form of a powder or granule, preferably a powder. The instant beverage product may therefore be a powder or granule with an average particle size of 1200 $\mu$m or less, preferably 1100 $\mu$m or less, and most preferably 1000 $\mu$m or less.

The instant beverage product is preferably soluble in water with temperature in the range from 4°C to 100°C, more preferably from 6°C to 90°C and most preferably from 10°C to 80°C.

Non-limiting examples of possible instant beverage products include an instant tea product, an instant herbal product, an instant coffee product and an instant cocoa product.

*Other additives*

The composition of the present invention may also comprise one or more polysaccharides. In some embodiments, the composition of the present invention comprises two polysaccharides: a first polysaccharide comprising maltodextrin and/or modified starch and a second polysaccharide comprising gum arabic and/or xanthan gum.

Preferably, the first polysaccharide is selected from maltodextrin, modified starch and mixtures thereof. Preferably, the first polysaccharide is maltodextrin.

Maltodextrin is a well-known food additive. It is a flavourless substance. It is generally produced from vegetable starch by hydrolysis. The starch is preferably corn or wheat.

The amount of maltodextrin used in the composition of the present invention is preferably in the range of 0.5 to 5%, more preferably 1 to 4%, furthermore preferably 2 to 4% and most preferably 2 to 3% by weight of the composition.

Preferably, the ratio of the iron compound to maltodextrin in the composition is between 8:1 and 1:8. More preferably, the ratio of iron to maltodextrin in the composition is between 8:1 and 1:4. Even more preferably, the ratio of iron compound to maltodextrin in the herbal composition is between 6:1 and 1:2. Yet more preferably, the ratio of iron to maltodextrin in the herbal composition is between 5:1 and 1:1. Most preferably, the ratio of iron to maltodextrin in the composition is between 4:1 and 1:1.

The term modified starch will be understood as being any naturally occurring starch that is modified by physical, chemical or enzymatic processes. Preferably, the modified starch is acetylated starch, dextrin or cross-linked starch.

The amount of modified starch used in the composition of the present invention is preferably in the range of 0.5 to 5%, more preferably 1 to 4%, furthermore preferably 2 to 4% and most preferably 2 to 3% by weight of the composition.

The composition of the present invention may also comprise a second polysaccharide. Preferably, the second polysaccharide is selected from gum arabic, xanthan gum and mixtures thereof. Gum arabic is also commonly known as gum acacia. It is an edible water-soluble gum widely used in food industries as stabilizer and/or thickener.

The amount of gum arabic and/or xanthan gum in the composition of the present invention preferably is in the range of 0.05 to 6%, more preferably 0.1 to 4%, further preferably 0.1 to 3% and most preferably 0.5 to 2% by weight.

In certain embodiments, the beverage composition may comprise one or more buffering agents. It will be understood that a buffering agent is any agent (compound) which may be added to the composition to maintain the pH of the beverage infusion within a specific range. Preferably, the buffering agent is a compound which can maintain the pH of the beverage infusion within the range of 4 to 6, more preferably within a range of 4.5 to 6, still more preferably within a range of 4.8 to 5.8, yet more preferably within a range of 5 to 5.6, and most preferably within a range of 5 to 5.3.

A non-limiting list of suitable buffering agents include citrates, carbonates, bicarbonates, phosphates, borates, glycine and combinations thereof. In certain embodiments, the buffering agent is a basic form of the acid included in the composition of the invention. For example, when the acid is citric acid, the buffering agent may be a citrate (e.g. sodium or potassium citrate).

In certain embodiments, the buffering agent is selected from a citrate, a carbonate a bicarbonate, a phosphate or combinations thereof. Suitably, the carbonate is a potassium or sodium carbonate. Suitably, the bicarbonate is a potassium or sodium bicarbonate. Suitably, the citrate is a sodium or potassium citrate.

In certain preferred embodiments, the buffering agent is sodium citrate.

The buffering agent may be present in any suitable amount. In some embodiments, the buffering agent is present in an amount of between 0.1 and 5% by weight of the composition. Preferably, the buffering agent is present in an amount of between 0.5 and 4% by weight of the composition, more preferably between 0.5 and 3% by weight of the composition.

In some embodiments, the beverage composition may also comprise milk powder. It will be appreciated that any suitable form of milk powder may be used. For example, the milk powder may be skimmed milk powder, semi-skimmed milk powder or whole milk powder.

In some embodiments, the beverage composition may also comprise sugar and/or one or more sweeteners. A non-limiting list of examples of possible sweeteners include acesulfame K, aspartame, saccharin, sorbitol, stevia, sucralose and xylitol.

In certain embodiments, the beverage composition comprises milk powder and sugar and/or one or more sweeteners.

It will also be understood that the beverage composition of the present invention may comprise one or more additional agents. For example, the beverage composition may comprise one or more nutrients, flavourings, bulking agents, anti-caking agents (e.g. silicon dioxide), cocoa extract etc.

A non-limiting list of possible flavourings include vanilla, fruit (e.g. strawberry, lemon, berry), ginger, cardamom, all spices, jasmine and tea essence (e.g. earl grey, black tea).

A non-limiting list of possible nutrients include vitamins (e.g. vitamin C and vitamin D), minerals (e.g. zinc, calcium, sodium) and essential fatty-acids (e.g. omega-3 and omega-6). Preferably, the one or more additional nutrients is selected from vitamins (e.g. vitamin C and vitamin D) and minerals (e.g. zinc, calcium, sodium), and most preferably vitamin D and/or zinc.

A non-limiting list of possible bulking agents include starch, carboxymethyl cellulose and sugar (e.g. dextrose).

It will be appreciated that the above additional agents may be added in any suitable amount. Preferably, the one or more additional agents are each independently added in an amount of between 0.01 and 5 % by weight of the composition, preferably between 0.05 and 4 % by weight of the composition, more preferably between 0.1 and 3 % by weight of the composition, and most preferably between 0.5 and 2 % by weight of the composition.

The present invention will now be demonstrated by way of non-limiting examples below. The examples are for illustration only and do not limit the scope of the invention in any manner.

**Examples**

*Materials used*

- Green tea leaf and black tea leaf were obtained from ekaterra tea Kenya Ltd.
- Rooibos tea was obtained from a Cape Natural, South Africa.
- Ferric sodium EDTA (FeNaEDTA, Sodium iron (III) ethylenediaminetetraacetate, Ferrazone®) was obtained from Nouryon Functional chemicals, Ferrazone (13.3% Fe content).
- Disodium EDTA.2H$_2$O (Disodium ethylenediaminetetraacetate dihydrate) was obtained from Fisher scientific.
- Citric acid monohydrate was obtained from Merck
- Vitamin C (L-ascorbic acid) was obtained from Sigma Aldrich.
- DL-Malic acid was obtained from Sigma Aldrich.
- Oxalic acid dihydrate was obtained from Sigma Aldrich.
- Tartaric acid was obtained from Sigma Aldrich.
- L-Ascorbic acid was obtained from Sigma Aldrich.
- Ferric chloride was obtained from Merck.
- Ferrous D-gluconate dihydrate was obtained from Merck.
- Ferrous ammonium sulphate hexahydrate was obtained from Merck.

*Methods used*

*Analysis of iron content in the tea infusion using ICPOES*

*Instrument details:*

ICP OES: Model name Agilent 5110

*Calibration of Instrument:*

A calibration blank of 2.5% Suprapur® nitric acid for ICP-OES was used.
Multi-element standard solutions available from Merck with a concentration of 1000ppm were used to calibrate the instrument. These solutions were diluted to concentrations of 1ppb - 1ppm of iron and the peak intensity of these solutions was obtained at a wavelength of 238.2 nm, measured at 25 °C. A calibration curve was then obtained at this specific wavelength using the measured peak intensities.
The concentration of iron in a sample being measured was then calculated using the following formula:

$$Concentration\ (ppb) = Peak\ Intensity\ /\ Slope$$

Where the peak intensity corresponds to the ICP OES peak intensity of the sample measured at 25°C using a wavelength of 238.2 nm, and the slope corresponds to the gradient of the calibration curve obtained at a wavelength of 238.2 nm, as described above.

*Preparation of sample for analysis:*

5.0 g of the infusion and aliquot 5 mL of concentrated HNOs was taken in a microwave digestor tube. This mixture was subjected to microwave irradiation (digested) for 60 minutes at 90 °C. The solution was then made up to 20 mL using deionised water. Filtering was only performed to remove any visible particles from the sample, otherwise the sample was directly injected into the instrument for measurement.

*Preparation of water with differing levels of total hardness (CaCO$_3$ equivalents)*

Simulated hard water was prepared by dissolving the salts as mentioned in Table A below. The total hardness of the water was measured using standard commercially available kits (De-ions systems, Bangalore).

Table A: Water composition of different hard water (Simulated)

| | Total hardness (CaCO$_3$ equivalents) | | |
|---|---|---|---|
| Total Hardness | 82 ppm | 54 ppm | 27 ppm |
| Salt | mg/L | mg/L | mg/L |
| Calcium chloride.2H$_2$O | 105 | 70 | 35 |
| Magnesium sulphate.7H$_2$O | 72 | 48 | 24 |
| Sodium bicarbonate | 210 | 140 | 70 |
| Potassium bicarbonate | 7.6 | 5 | 2.5 |

**Preparation of different iron fortified tea products**

A set of different iron fortified tea products were prepared using the processes as described below.

*Example 1*

The coating solution was prepared by dissolving 4.0 g of FeNaEDTA in 45 ml of deionised water at 35 °C. The solution was homogenised using a Silverson homogeniser at 1000 rpm for 2-3 minutes to get a clear solution free from insoluble residues. The coating solution was sprayed onto 96.0 g of fannings grade green tea obtained from Kenya and the coated tea was then mixed and dried in a fluidised bed drier to get moisture of <5%. About 1.0 g of iron coated green tea was then blended with 1.0 g of standard green tea obtained from Kenya and the resulting blend was then used to prepare the infusions as per the protocol mentioned below.

*Example 2*

The coating solution was prepared by dissolving 4.0 g of FeNaEDTA in 45 ml of deionised water at 35 °C. The solution was homogenised using a Silverson homogeniser at 1000 rpm for 2-3 minutes to get a clear solution free from insoluble residues. The coating solution was sprayed onto 96.0 g of fannings grade green tea obtained from Kenya and then it was mixed well and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 3*

The coating solution was prepared by dissolving 4.0 g of FeNaEDTA and 4.0 g of disodium EDTA in 45 ml of deionised water at 35 °C. The solution was homogenised using a Silverson homogeniser at 1000 rpm for 2-3 minutes to get a clear solution free from insoluble residues. The coating solution was sprayed onto 92 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 4*

The coating solution was prepared by dissolving 4.0 g of FeNaEDTA and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 91.3 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 5*

The coating solution was prepared by dissolving 4.0 g of FeNaEDTA ,4.0 g of disodium EDTA & 4.7 g of citric acid mono hydrate in 45 ml of deionised water at 35 °C. The solution was homogenised using a Silverson homogeniser at 1000 rpm for 2-3 minutes to get a clear solution free from insoluble residues. The coating solution was sprayed onto 87.0 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Tea infusion preparation protocol*

2.0 g of blended tea product was taken in a bowl and 200 mL of boiling water was poured in it. After 2 minutes of brewing, the content was filtered using a strainer and the filtered tea was taken for further analysis. For Example, 1, water with a total hardness of 23 ppm was used. For Examples 2 to 5, water with a total hardness of 82 ppm was used.

Control experiments were also run where infusions were prepared form 2.0g of uncoated green tea obtained from Kenya in 200 mL of boiling water using water with either a total hardness of 23 ppm (C1) or a total hardness of 82 ppm (C2).

The a* and b* values were then measured using the following procedure:

Colour (CIE L*a*b* values) was measured using a Hunter lab Ultrascan Vis (Hunterlab Associates Laboratories Inc. Virginia). A halogen cycle lamp was used as the light source. The illuminant used was D65 and the measurements were made at 10° Observer angle. Measurements were made using a quartz cuvette of 10 mm path length. Tea infusions as prepared above was filled up to the brim in the quartz cuvette and placed in the instrument for colour measurement. The instrument was calibrated using a standard white tile (Hunterlab Duffuse/10°, mode-Titran, Port-1" and area- large) in accordance with the instructions provided in the instruction's manual. The L*a*b*haze values were measured at room temperature (35 Deg C).

Colour can be expressed using the coordinates of the CIE 1976 L*a*b* colour space. The CIE L*a*b* colour space is organised in a cubic form. The L* axis runs from top to bottom. The maximum value for L* is 100 (which represents a perfect reflecting diffuser), and the minimum value for L* is 0 (which represents black). The a* and b* axes have no specific numerical limits. The a* axis extends from green (-a*) to red (+a*), and the b* axis from blue (-b*) to yellow (+b*). CIE L*a*b* values can be measured by colourimetry according to the joint ISO/CIE standard (ISO 11664-4:2008(CE); CIE S 014-4/E:2007).

The colour of the black leaf tea product can be measured using CIE L*a*b* colour space. This measurement can be performed directly on the leaf tea by colourimetry (according to the joint ISO/CIE standard ISO 11664-4:2008(CE); CIE S 014-4/E:2007).

The a* and b* axes have no specific numerical limits. Positive a* is red and negative a* is green. The higher the b* value, the brighter the infusion appears. The haze of the infusion was measured using the same Hunter lab Ultrascan Vis instrument as mentioned above, using the same processing conditions (Total transmittance mode using D65 as the illuminant, 10 deg observer angle and a 10 mm cuvette path length). A higher the haze value at D65/10 is indicative of a cloudier infusion.

The results are shown in Table 1 below.

*Table 1: Colour of green tea infusions made from various compositions comprising FeNaEDTA (brewed in water with different levels of total hardness)*

| Example | Composition | Total Hardness of water (ppm) | L* | a* | b* | Haze (D65/10) |
|---------|-------------|-------------------------------|------|------|------|----------------|
| C1 | Control | 23 | 86.7 | -2.4 | 35.6 | 14.9 |
| C2 | Control | 82 | 83.8 | -2.7 | 41.3 | 21.4 |
| 1 | FeNaEDTA | 23 | 68.5 | 1.6 | 25.0 | 14.0 |
| 2 | FeNaEDTA | 82 | 50.8 | 8.6 | 29.4 | 18.4 |
| 3 | FeNaEDTA + EDTA | 82 | 71.0 | 2.7 | 31.7 | 14.2 |
| 4 | FeNaEDTA + Citric acid | 82 | 87.4 | -1.2 | 24.0 | 10.0 |
| 5 | FeNaEDTA + EDTA + Citric acid | 82 | 88.9 | -1.2 | 27.1 | 11.0 |

From the data in Table 1 it is evident that examples (4 and 5) within the scope of the present invention provide tea infusions with an infusion colour and brightness (negative a* value and L* value ≥75) similar to standard unfortified green tea (controls C1 and C2).

*Variation of the amount of acid*

A set of different iron fortified tea products were prepared in which the amount of acid was varied.

*Example 6*

The coating solution was prepared by dissolving 4.0 g of FeNaEDTA and 1.2 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 94.8 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 7*

The coating solution was prepared by dissolving 4.0 g of FeNaEDTA and 2.4 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 93.7g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 8*

The coating solution was prepared by dissolving 4.0 g of FeNaEDTA and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 91.3 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 9*

The coating solution was prepared by dissolving 4.0 g of FeNaEDTA and 7.1 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 89.0 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Infusions were then prepared using the above tea products by following the same brewing protocol as described hereinabove, albeit the water used had a hardness of 27 ppm of total hardness. The L*, a* and b* values were then measured using the procedure described above. The L*, a* and b* values for unfortified green tea (C3) were also measured. The results are summarised in Table 2 below.

The sensorial properties of the brewed teas were also assessed in an informal tasting session. The observations from this session are summarised in Table 2.

*Table 2: Colour and taste of green tea infusions made from compositions using differing amounts of acid (brewed in soft water; 27ppm of total hardness)*

| Example | Composition | % Fe in final Blend | % Acid in Blend | L* | a* | b* | Taste |
|---------|-------------|---------------------|-----------------|------|------|------|-------|
| C3 | Control | - | - | 86.7 | -2.4 | 35.6 | - |
| 6 | FeNaEDTA (0.5%Fe) + Citric acid (1.2%) | 0.26% | 0.60% | 76.6 | 0.4 | 25.2 | Similar to control |

(continued)

| Example | Composition | % Fe in final Blend | % Acid in Blend | L* | a* | b* | Taste |
|---|---|---|---|---|---|---|---|
| 7 | FeNaEDTA (0.5%Fe) + Citric acid (2.4%) | 0.26% | 1.20% | 83.5 | -0.6 | 25.7 | Similar to control |
| 8 | FeNaEDTA (0.5%Fe) + Citric acid (4.7%) | 0.26% | 2.30% | 88.6 | -1.1 | 23.6 | Similar to control |
| 9 | FeNaEDTA (0.5%Fe) + Citric acid (7%) | 0.26% | 3.50% | 90.0 | -1.2 | 22.4 | Mild sour taste |

As can be seen from Table 2, all compositions within the scope of the present invention achieved a similar taste to standard green tea (control C3) and/or a colour and brightness which is comparable to the standard green tea (low a* value).

For compositions with relatively large amounts of acid added (Example 9, 3.5 wt% of acid), mild sour taste notes start to be introduced into the beverage product.

Varying of type of acid

Next, experiments varying the type of acid were performed, as discussed below.

Example 10

The coating solution was prepared by dissolving 4.0 g of FeNaEDTA and 4.7 g of citric acid monohydrate in 45 ml of deionised water at 35 °C. The solution was homogenised using silverson homogeniser at 1000 rpm for 2-3 minutes to get a clear solution free from insoluble residues. The coating solution was sprayed onto 91.3 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Example 11

The coating solution was prepared by dissolving 4.0 g of FeNaEDTA and 2.9 g of DL Malic acid in 45 ml of deionised water at 35 °C. The solution was homogenised using a Silverson homogeniser at 1000 rpm for 2-3 minutes to get a clear solution free from insoluble residues. The coating solution was sprayed onto 93.1 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Example 12

The coating solution was prepared by dissolving 4.0 g of FeNaEDTA and 2.8 g of oxalic acid dihydrate in 45 ml of deionised water at 35 °C. The solution was homogenised using a Silverson homogeniser at 1000 rpm for 2-3 minutes to get a clear solution free from insoluble residues. The coating solution was sprayed onto 93.2 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Example 13

The coating solution was prepared by dissolving 4.0 g of FeNaEDTA and 3.3 g of tartaric acid in 45 ml of deionised water at 35 °C. The solution was homogenised using a Silverson homogeniser at 1000 rpm for 2-3 minutes to get a clear solution free from insoluble residues. The coating solution was sprayed onto 92.7 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 14*

The coating solution was prepared by dissolving 4.0 g of FeNaEDTA and 4.0 g of L-ascorbic acid in 45 ml of deionised water at 35 °C. The solution was homogenised using a Silverson homogeniser at 1000 rpm for 2-3 minutes to get a clear solution free from insoluble residues. The coating solution was sprayed onto 92.0 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Infusions were then prepared using the above tea products by following the same brewing protocol as described hereinabove (using water with a hardness of 82 ppm). The L*, a* and b* values were then measured using the procedure described above. The L*, a* and b* values for unfortified green tea (Control 4) and green tea fortified with FeNaEDTA (Experiment 2) were also measured. The results are summarised in Table 3 below.

*Table 3: Colour and iron delivery of green tea infusions made from compositions using differing types of acid (brewed in soft water; 82 ppm total hardness)*

| Example | Iron Source | Acid | Iron Delivery mg/cup | % Fe in final Blend | % Acid in Blend | L* | a* | b* |
|---|---|---|---|---|---|---|---|---|
| C4 | - | - | - | - | - | 86.7 | -2.4 | 35.6 |
| 2 | FeNaEDTA | - | 3.3 | 0.26% | - | 50.8 | 8.6 | 29.4 |
| 10 | FeNaEDTA | Citric acid | 4.4 | 0.26% | 2.30% | 82.0 | -1.1 | 22.9 |
| 11 | FeNaEDTA | Malic acid | 3.7 | 0.26% | 1.45% | 85.5 | -1.2 | 23.6 |
| 12 | FeNaEDTA | Oxalic acid | 3.6 | 0.26% | 2.30% | 85.6 | -1.0 | 22.6 |
| 13 | FeNaEDTA | Tartaric acid | 3.8 | 0.26% | 2.30% | 89.2 | -1.6 | 23.0 |
| 14 | FeNaEDTA | L-Ascorbic acid | 3.8 | 0.26% | 2.30% | 73.8 | 9.4 | 25.0 |

As can be seen from the data in Table 3, the compositions of the present invention beneficially all provide infusion liquors with excellent colour and brightness (negative a* value and L* value ≥75) except L-Ascorbic acid. Furthermore, the compositions of the present invention also beneficially provide excellent delivery of iron to the end cup.

*Variation of the type of water-soluble iron source*

A set of different iron fortified tea products were prepared in which the type of water-soluble iron was varied.

*Example 15*

The coating solution was prepared by dissolving 4.0 g of FeNaEDTA in 45 ml of deionised water at 35 °C. The solution was homogenised using a Silverson homogeniser at 1000 rpm for 2-3 minutes to get a clear solution free from insoluble residues. The coating solution was sprayed onto 96.0 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 16*

The coating solution was prepared by dissolving 1.55 g of ferric chloride in 45 ml of deionised water at 35 °C. The solution was homogenised using a Silverson homogeniser at 1000 rpm for 2-3 minutes to get a clear solution free from insoluble residues. The coating solution was sprayed onto 98.5 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 17*

The coating solution was prepared by dissolving 4.55 g of ferrous D-gluconate dihydrate in 45 ml of deionised water at 35 °C. The solution was homogenised using a Silverson homogeniser at 1000 rpm for 2-3 minutes to get a clear solution free from insoluble residues. The coating solution was sprayed onto 95.5 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 18*

The coating solution was prepared by dissolving 3.75 g of ferrous ammonium sulphate hexahydrate in 45 ml of deionised water at 35 °C. The solution was homogenised using a Silverson homogeniser at 1000 rpm for 2-3 minutes to get a clear solution free from insoluble residues. The coating solution was sprayed onto 91.6 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 19*

The coating solution was prepared by dissolving 4.0 g of FeNaEDTA and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 91.3 g of fannings grade green tea obtained from Kenya and then it was mixed well and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 20*

The coating solution was prepared by dissolving 1.55 g of ferric chloride and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 93.8g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 21*

The coating solution was prepared by dissolving 4.55 g of ferrous D-gluconate dihydrate and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 90.8 g of fannings grade green tea obtained from Kenya the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

*Example 22*

The coating solution was prepared by dissolving 3.75 g of ferrous ammonium sulphate hexahydrate and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 91.6 g of fannings grade green tea obtained from Kenya and the coated tea was then mixed and dried in fluidised bed drier to get moisture of <5%. About 1.0 g of iron coated green tea was blended with 1.0 g of standard green tea obtained from Kenya and the resulting blend was then used to prepare the infusions as per the protocol mentioned below.

Infusions were then prepared using the above tea products by following the same brewing protocol as described hereinabove (using water with a hardness of 82 ppm). The L*, a* and b* values were then measured using the procedure described above. The results are summarised in Table 4 below.

*Table 4: Colour of green tea infusions made from compositions using differing sources of iron (brewed in hard water; 82 ppm of total hardness)*

| Example | Iron Source | Acid | % Fe in final Blend | % Acid in Blend | L* | a* | b* |
|---|---|---|---|---|---|---|---|
| 15 | FeNaEDTA | - | 0.26% | - | 68.5 | 3.3 | 25.0 |
| 16 | Ferric chloride | - | 0.26% | - | 37.1 | 7.5 | 9.0 |
| 17 | Ferrous D-gluconate | - | 0.26% | - | 28.9 | 9.2 | 5.5 |
| 18 | Ferrous Ammonium Sulphate | - | 0.26% | - | 26.0 | 10.0 | 3.9 |
| 19 | FeNaEDTA | Citric Acid | 0.26% | 2.3% | 87.4 | -1.2 | 24.0 |
| 20 | Ferric chloride | Citric Acid | 0.26% | 2.3% | 75.3 | -0.8 | 18.8 |
| 21 | Ferrous D-gluconate | Citric Acid | 0.26% | 2.3% | 76.6 | -0.8 | 19.8 |
| 22 | Ferrous Ammonium Sulphate | Citric Acid | 0.26% | 2.3% | 78.9 | -1.2 | 18.0 |

From the data in Table 4, for all tested water-soluble iron sources that fall within the scope of the claims, tea infusions with an excellent infusion colour and brightness (negative a* value and L* value ≥75), which is similar to standard unfortified green tea, were achieved.

*Variation of the water hardness*

A set of tea infusions prepared using water with differing hardness were prepared.

*Examples C5*

Standard green tea obtained from Kenya brewed in water with total hardness of 27 ppm, 54 ppm and 82 ppm .

*Examples 23*

Examples 23 is prepared using the same protocol as described for Example 8.

Infusions were then prepared using Example 23 and standard green tea obtained from Kenya (Control C5) by following the same brewing protocol as described hereinabove (using water with a hardness of 27, 54 and 82 ppm). The L*, a* and b* values were then measured using the procedure described above. The results are summarised in Table 5 below.

*Table 5: Colour and iron delivery of green tea infusions made from compositions comprising FeNaEDTA and citric acid (brewed in water with differing hardness)*

| Total Hardness of brewing water (ppm) | Example | Composition | L* | a* | b* | Iron Delivery mg/cup |
|---|---|---|---|---|---|---|
| 27 | C5 | Control | 86.7 | -2.4 | 35.6 | - |
| | 23 | FeNaEDTA + Citric Acid | 83.5 | -0.6 | 25.7 | 4.9 |

(continued)

| Total Hardness of brewing water (ppm) | Example | Composition | L* | a* | b* | Iron Delivery mg/cup |
|---|---|---|---|---|---|---|
| 54 | C5 | Control | 86.0 | -3.2 | 35.0 | - |
| | 23 | FeNaEDTA + Citric Acid | 88.6 | -1.4 | 24.4 | 4.7 |
| 82 | C5 | Control | 85.4 | -3.2 | 37.8 | - |
| | 23 | FeNaEDTA + Citric Acid | 85.6 | -1.06 | 24.0 | 4.4 |

As can be seen from the data in Table 5, infusions prepared using the compositions of the invention using soft and hard water beneficially achieve excellent infusion colour and brightness (negative a* value and L* value ≥75). The data in Table 5 further demonstrates that excellent iron delivery is achieved across all water samples, thereby demonstrating no detriment to iron delivery upon using hard or soft water.

*Variation of the beverage source*

A set of different iron fortified tea products were prepared in which the beverage product was varied.

*Example 25*

The coating solution was prepared by dissolving 4.0 g of FeNaEDTA in 45 ml of deionised water at 35 °C. The solution was homogenised using a Silverson homogeniser at 1000 rpm for 2-3 minutes to get a clear solution free from insoluble residues. The coating solution was sprayed onto 96.0 g of fannings grade black tea obtained from Kenya and the coated tea was then mixed and dried in fluidised bed drier to get moisture of <5%. About 1.0 g of iron coated black tea was blended with 1.0 g of standard black tea obtained from Kenya and the resulting blend was then used to prepare the infusions as per the protocol mentioned below.

*Example 26*

The coating solution was prepared by dissolving 4.0 g of FeNaEDTA and 4.7 g of citric acid monohydrate in 45 ml of deionised water at 35 °C. The solution was homogenised using a Silverson homogeniser at 1000 rpm for 2-3 minutes to get a clear solution free from insoluble residues. The coating solution was sprayed onto 91.3 g of fannings grade black tea obtained from Kenya and the coated tea was then mixed and dried in fluidised bed drier to get moisture of <5%. About 1.0 g of iron coated black tea was blended with 1.0 g of standard black tea obtained from Kenya and the resulting blend was then used to prepare the infusions as per the protocol mentioned below.

Infusions were then prepared using the above tea products by following the same brewing protocol as described hereinabove (using water with a total hardness of 82 ppm). The L*, a* and b* values were then measured using the procedure described above. The L*, a* and b* values for unfortified black tea (Control 6) was also measured. The results are summarised in Table 6 below.

*Table 6: Colour and iron delivery of black tea infusions made from different compositions comprising FeNaEDTA and brewed in 82 ppm total hardness water)*

| Examples | Composition | L* | a* | b* | Iron Delivery (mg/cup) |
|---|---|---|---|---|---|
| C6 | Control black tea | 63.5 | 20 | 69 | - |
| 25 | FeNaEDTA(0.26% Fe) | 54 | 27 | 45 | 3.7 |
| 26 | FeNaEDTA(0.26% Fe)+ 2.3% Citric Acid | 69.7 | 11 | 67.3 | 3.8 |

As can be seen from the data in Table 6, the compositions of the invention beneficially provide infusion liquors with L*, a* and b* values that are both high and comparable to those achieved for a standard black tea infusion.

*Example 27*

The coating solution was prepared by dissolving 6.0 g of FeNaEDTA in 45 ml of deionised water at 35 °C. The solution was homogenised using a Silverson homogeniser at 1000 rpm for 2-3 minutes to get a clear solution free from insoluble residues. The coating solution was sprayed onto 94.0 g of fannings grade Rooibos tea obtained from South Africa and the coated tea was then mixed and dried in fluidised bed drier to get moisture of <5%. About 0.24 g of iron coated Rooibos tea was blended with 1.76 g of standard Rooibos tea obtained from South Africa and the resulting blend was then used to prepare the infusions as per the protocol mentioned below.

*Example 28*

The coating solution was prepared by dissolving 6.0 g of FeNaEDTA and 4.0 g of citric acid monohydrae was in 45 ml of deionised water at 35 °C. The solution was homogenised using a Silverson homogeniser at 1000 rpm for 2-3 minutes to get a clear solution free from insoluble residues. The coating solution was sprayed onto 90.0 g of fannings grade Rooibos tea obtained from South Africa and the coated tea was then mixed and dried in fluidised bed drier to get moisture of <5%. About 0.24 g of iron coated Rooibos tea was blended with 1.76 g of standard Rooibos tea obtained from South Africa and the resulting blend was then used to prepare the infusions as per the protocol mentioned below.

Infusions were then prepared using the above tea products by taking 2.0g of tea in tea bag and brewed in 150 ml for 3 minutes using freshly boiled water with 27 ppm total hardness. The L*, a* and b* values were then measured using the procedure described above. The L*, a* and b* values for unfortified Rooibos tea (Control 7) was also measured. The results are summarised in Table 7 below.

*Table 7*: *Colour of Rooibos tea infusions made from different compositions comprising FeNaEDTA*

| Examples | Composition | L* | a* | b* |
|---|---|---|---|---|
| C7 | Control Rooibos tea | 75 | 19 | 83 |
| 27 | FeNaEDTA (0.1% Fe)-Rooibos tea | 69 | 18 | 73 |
| 28 | FeNaEDTA(0.1% Fe) + Citric Acid (0.5%)-Rooibos tea | 75 | 17 | 81 |

For herbal tea products, such as Rooibos tea, brighter infusion colours (i.e. high L* and high b* values) are preferred by consumers. As can be seen from the data in Table 7, the compositions of the invention beneficially provide infusion liquors with L* and b* values that are both high and comparable to a standard green tea infusion.

*Further variation of iron source*

A set of different iron fortified tea products were prepared in which the iron source and additive were varied.

*Example 29*

About 1.2 g of Ferric citrate and 3.3 g of disodium EDTA was dispersed in 55 ml of water and the solution was homogenised using a Silverson mixer at 1000 rpm for 5 minutes. The coating solution was used to coat 45.0 g of green tea obtained from Kenya. 1.0 g of coated tea was blended with 1.0 g of control green tea and the resulting blend was then used to prepare the infusions as per the protocol mentioned below.

Infusions were then prepared using 2.0 g of final blend in 200 ml of freshly boiled hot water with 82 ppm total hardness) in loose for 2 minutes. The liquor was strained and used for colour measurements. The L*, a* and b* values were then measured using the procedure described above. The L*, a* and b* values for unfortified green tea (Control 8) was also measured. The results are summarised in Table 8 below.

*Table 8: Colour and iron delivery of green tea infusions made from compositions comprising differing iron sources and additives (brewed in hard water; 82 ppm)*

| Examples | Composition | % Fe in final Blend | mg Fe delivered to end cup | L* | a* | b* |
|---|---|---|---|---|---|---|
| C8 | Control | - | - | 86.7 | -2.4 | 35.6 |
| 1 | FeNaEDTA | 0.26% | 3.0 | 68.5 | 3.3 | 25.0 |

(continued)

| Examples | Composition | % Fe in final Blend | mg Fe delivered to end cup | L* | a* | b* |
|---|---|---|---|---|---|---|
| 29 | Ferric Citrate + EDTA | 0.26% | 1.8 | 79.0 | 1.9 | 36.4 |
| 8 | FeNaEDTA + Citric acid | 0.26% | 4.4 | 88.6 | -1.1 | 23.6 |

As can be seen from the data in Table 8, upon using a poorly soluble iron source such as iron citrate (water solubility at 25°C of 0.005 g/mL) both poor infusion colour and poor iron delivery to the end cup is achieved. On the contrary, upon using a water-soluble iron compound together with an acid, such as citric acid, as per the present invention, excellent infusion colour and iron delivery is achieved.

**Claims**

1. A beverage composition comprising;

   a) a water-soluble iron compound;
   b) at least one acid; and
   c) a beverage product,

   wherein:

   - the water-soluble iron compound has a solubility in water at 25 °C of 0.006g/mL or greater; and
   - when the acid is ascorbic acid, one or more further acids are also present.

2. A composition according to claim 1, wherein the beverage product is a leaf tea product.

3. A composition according to claim 1 or claim 2, wherein the acid has a pKa value of less than 4.0.

4. A composition according to any one of claims 1 to 3, wherein the acid is a polycarboxylic acid.

5. A composition according to any preceding claim, wherein the acid is selected from citric acid, malic acid, oxalic acid or tartaric acid.

6. A composition according to any preceding claim, wherein the water-soluble iron compound is selected from ferric sodium EDTA, ferric chloride, ferrous d-gluconate, ferrous ammonium sulphate or ferric EDDHA, preferably ferric sodium EDTA.

7. A composition according to any preceding claim, wherein the composition comprises a first polysaccharide comprising maltodextrin and/or modified starch; and a second polysaccharide comprising gum arabic and/or xanthan gum.

8. The composition according to any preceding claim, wherein the leaf tea product is selected from a black tea product, a green tea product, an oolong tea product, a white tea product or blends thereof, preferably a black tea or green tea product.

9. The composition according to any one of claims 1 to 8 wherein the leaf tea product is a herbal tea product.

10. The composition according to claim 10, wherein the herbal tea product is selected from a rooibos tea product, a hibiscus tea product, a chamomile tea product or blends thereof, preferably a rooibos tea product.

Europäisches Patentamt

European Patent Office

Office européen des brevets

# EUROPEAN SEARCH REPORT

**Application Number**

EP 23 15 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCGEE ELISA JUNE TERESA ET AL: "Prevention of iron-polyphenol complex formation by chelation in black tea", LWT- FOOD SCIENCE AND TECHNOLOGY, ACADEMIC PRESS, UNITED KINGDOM, vol. 89, 25 November 2017 (2017-11-25), pages 756-762, XP085313174, ISSN: 0023-6438, DOI: 10.1016/J.LWT.2017.11.041 | 1-5 | INV. A23F3/14 A23F3/16 A23F5/14 A23F5/24 A23F5/36 A23F5/42 A23G1/56 A23L2/52 |
| Y | * Section 2.4, Section 3.2, Section 3.3; page 2, column 1, line 1 – page 4, column 2, line 35 * | 7,9,10 | A23L2/68 A23L29/00 A23L29/212 A23L29/219 A23L29/231 |
| X | MCGEE ELISA JUNE ET AL: "Development of Spectrophotometric Quantification Method of Iron-Polyphenol Complex in Iron-Fortified Black Tea at Relevant pH Levels", FOOD ANALYTICAL METHODS, SPRINGER NEW YORK LLC, US, vol. 11, no. 6, 12 January 2018 (2018-01-12), pages 1645-1655, XP036493876, ISSN: 1936-9751, DOI: 10.1007/S12161-018-1147-8 [retrieved on 2018-01-12] * table 4 * | 6,8 | A23L29/238 A23L29/25 A23L29/256 A23L29/30 |

-----

-----

-/--

**TECHNICAL FIELDS SEARCHED (IPC)**

A23F
A23G
A23L

The present search report has been drawn up for all claims

| Place of search | Date of completion of the search | Examiner |
|---|---|---|
| The Hague | 19 July 2023 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 15 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Drink These Instead of Black Tea: Rooibos & Honeybush- Teas.com.au", , 17 October 2017 (2017-10-17), pages 1-4, XP93065086, Retrieved from the Internet: URL:https%3A%2F%2Fwww.teas.com.au%2Fblogs%2Fblog%2F132248707-rooibos-and-honeybush-06-08 [retrieved on 2023-07-19] * the whole document *<br>----- | 9,10 | A23L33/16<br>A23L33/165 |
| Y | WO 2022/128174 A1 (UNILEVER IP HOLDINGS B V [NL]; UNILEVER PLC [GB] ET AL.) 23 June 2022 (2022-06-23) * example A *<br>----- | 7 | |
| A | WO 2017/054084 A1 (GOVERNING COUNCIL UNIV TORONTO [CA]) 6 April 2017 (2017-04-06) * the whole document *<br>----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 19 July 2023 | Kelly, Michael |

EPO FORM 1503 03.82 (P04C01)

## ANNEX TO THE EUROPEAN SEARCH REPORT
## ON EUROPEAN PATENT APPLICATION NO.

EP 23 15 4028

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2023

| Patent document cited in search report | | Publication date | Patent family member(s) | | Publication date |
|---|---|---|---|---|---|
| WO 2022128174 | A1 | 23-06-2022 | AR | 122748 A1 | 05-10-2022 |
| | | | WO | 2022128174 A1 | 23-06-2022 |
| WO 2017054084 | A1 | 06-04-2017 | CA | 3000665 A1 | 06-04-2017 |
| | | | CN | 108135200 A | 08-06-2018 |
| | | | US | 2018279638 A1 | 04-10-2018 |
| | | | WO | 2017054084 A1 | 06-04-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6998143 B
- WO 03032741 A
- US 10863753 B